Europäisches Patentamt

European Patent Office

Office européen des brevets

(19)

(11) Veröffentlichungsnummer : **0 042 132**
**B1**

(12) **EUROPÄISCHE PATENTSCHRIFT**

(45) Veröffentlichungstag der Patentschrift :
**15.08.84**

(21) Anmeldenummer : **81104410.6**

(22) Anmeldetag : **09.06.81**

(51) Int. Cl.³ : **B 29 C 17/07**

(54) Vorformling und Formwerkzeug zum Streckblasen.

(30) Priorität : **16.06.80 DE 3022529**

(43) Veröffentlichungstag der Anmeldung :
**23.12.81 Patentblatt 81/51**

(45) Bekanntmachung des Hinweises auf die Patenterteilung : **15.08.84 Patentblatt 84/33**

(84) Benannte Vertragsstaaten :
**AT BE CH DE FR GB IT LI LU NL SE**

(56) Entgegenhaltungen :
**DE-A- 1 904 753**
**DE-A- 2 116 318**
**DE-A- 2 454 134**
**FR-A- 1 363 461**
**FR-A- 1 500 315**
**FR-A- 2 169 900**
**FR-A- 2 215 304**
**FR-A- 2 343 587**
**US-A- 3 471 896**
**US-A- 3 740 180**

(73) Patentinhaber : **Henkel Kommanditgesellschaft auf
Aktien
Postfach 1100 Henkelstrasse 67
D-4000 Düsseldorf-Holthausen (DE)**

(72) Erfinder : **vom Hofe, Dieter
Uedesheimer Weg 2
D-5000 Köln 71 (DE)**

Jouve, 18, rue St-Denis, 75001 Paris, France

EP 0 042 132 B1

## Beschreibung

Die Erfindung betrifft einen Vorformling und ein Formwerkzeug zum Streckblasen, bei dem ein länglicher, einseitig offener, hohler Vorformling mechanisch in Längsrichtung gereckt und gleichzeitig oder anschließend pneumatisch in radialer Richtung in eine Hohlblasform hinein aufgeblasen wird und beim mechanischen Längsrecken und pneumatischen Radialrecken besondere Vorkehrungen zum ständig exakten Führen der Mitte des als Kuppe ausgebildeten geschlossenen Vorformlingendes in die genaue Mitte des Hohlblasformbodens getroffen werden und die Vorformlingkuppe bis zum Ende des pneumatischen Radialreckens unverrückbar im Zentrum des Hohlblasformbodens festgeklemmt wird und die Vorformlingkuppe beim Längsrecken ständig mit Hilfe des Reckdorns zentriert geführt und gleichzeitig der Vorformling im Anschluß an die Kuppe durch Blasen radial gereckt wird.

Ein Verfahren zum Streckblasen mit einem Vorformling ist bereits bekannt aus DE-A-24 54 134. Hierdurch lassen sich ganz allgemein Hohlkörper herstellen, welche gegenüber denjenigen des konventionellen Blasens aus der thermoplastischen Phase insbesondere hinsichtlich ihrer mechanischen beziehungsweise physikalischen Eigenschaften bei verringertem Materialeinsatz wesentliche Verbesserungen aufweisen.

Man unterscheidet allgemein Einstufen- und Zweistufen-Verfahren. In beiden Fällen wird zunächst ein Vorformling hergestellt, der bei einer bestimmten materialabhängigen Temperatur mittels eines Reckdorns in Längsrichtung mechanisch gereckt wird und gleichzeitig oder unmittelbar danach durch ein gasförmiges Medium, bei dem es sich in aller Regel um Luft handelt, zu der endgültigen Form in radialer Richtung aufgeblasen wird.

Das Besondere am Streckblasverfahren ist das mechanische Recken mit Hilfe eines Reckdorns. Diesem Vorgang kommt insofern besondere Bedeutung zu, als im wesentlichen dadurch die Verbesserung der Eigenschaften der Hohlkörper gegenüber herkömmlich geblasenen Hohlkörpern zu erzielen ist. Der in Längsrichtung wünschenswerte, mechanisch zu erzielende Reckgrad kann an sich bei der Vielfalt der herzustellenden Hohlkörper — abhängig von Formgebung, Wandstärke und weiteren Eigenschaften, die ein bestimmter herzustellender Hohlkörper haben soll —, sehr unterschiedlich sein.

Die deutsche Auslegeschrift 20 62 283 beschreibt auch streckgeblasene Flaschen, die beständig gegen eine Verformung durch Druck sind und die bereits relativ dünnwandig ausgebildet sind und bei deren Herstellung Reckgrade in axialer Richtung bis zum Vierfachen der Vorformlingslänge und bis zum Siebenfachen des Vorformlingsdurchmessers erreicht werden. Das Gewichts-Volumen-Verhältnis solcher Flaschen, ausgedrückt in g und cm³, liegt im Bereich zwischen 0,005 bis 0,2 : 1.

Demgegenüber besteht die Aufgabe der Erfindung darin, den Vorformling und das Formwerkzeug nach dem Oberbegriff so zu verbessern, daß bei Einsatz eines Vorformlings ausreichend hoher Wandstärkengleichmäßigkeit das Entstehen eines entsprechend gleichmäßig ausgebildeten Hohlkörpers hoher Qualität gewährleistet werden kann. Die erfindungsgemäße Lösung besteht in der Ausgestaltung des Vorformlings sowie des Formwerkzeugs gemäß Anspruch 1.

Der in der Regel mit großem technischen Aufwand und hoher Präzision hergestellte Vorformling wird zunächt derart in Längsrichtung verstreckt daß die Mitte eines Längsendes genau in die Mitte des herzustellenden Hohlkörperbodens gelangt und daß dann radial durch Aufblasen verstreckt wird, ohne daß auf dem Reckweg in Längsrichtung oder beim Recken in radialer Richtung bzw. Aufblasen diese Mitte auch nur kurzfristig abweicht oder verlorengeht. Wenn das mechanische Längsrecken und pneumatische Radialstrecken nacheinander erfolgen, wird vorzugsweise die Vorformlingkuppe bis zum Ende des pneumatischen Radialreckens unverrückbar im Zentrum des Bodens der Hohlblasform festgeklemmt. In der Praxis kann der radiale Reckvorgang aber schon vor Beendigung des Längsreckens mit diesem kombiniert ablaufen. Es wird dann vorzugsweise die Vorformkuppe beim Längsrecken ständig mit Hilfe des Reckdorn zentriert geführt bzw. gehalten und gleichzeitig der Vorformling im Anschluß an die Kuppe durch Blasen radial gereckt.

So können gegenüber dem Stand der Technik noch wesentlich dünnwandigere Hohlkörper erzeugt werden. Die Verstreckung der Vorformlinge in axialer Richtung kann dabei das Vierfache der Vorformlingslänge und das Siebenfache des Vorformlingsdurchmessers übersteigen.

Das Gewicht-Volumen-Verhältnis solcher extrem dünnwandiger Hohlkörper, ausgedrückt in g und cm³ kann im Bereich zwischen 0,002 : 1 bis 0,005 : 1 liegen.

Das ganz allgemein die gewünschte Wandstärkengleichmäßigkeit eines aus Kunststoff bestehenden Hohlkörpers bestimmend dafür ist, wie wirtschaftlich der Körper hergestellt werden kann und welche Eigenschaften ihm verleihen sind, ohne unnötig viel Kunststoffmaterial einzusetzen, kommt auch der Wandstärkengleichmäßigkeit des verwendeten Vorformlings, insbesondere am Umfang, eine erhebliche Bedeutung zu. Bei mechanischen Recken in der Längsrichtung ist dann darauf zu achten, daß die ursprüngliche Wandstärkengleichheit am Vorformling erhalten bleibt, d. h. daß die einzelnen Kunststoffpartikel möglichst gleichmäßig verstreckt werden. Geschieht das nämlich nicht, so entstehen beim gleichzeitigen oder unmittelbar nachfolgenden pneumatischen, in radialer Richtung wirkenden Streckvorgang zwangsläufig unterschiedliche Wandstärken am Umfang des fertigen Hohlkörpers. Besonders störend sind solche Ungleichheiten z. B. am Übergang zwischen Hohlkörpermantel und Hohlkörperboden, da hier ungleiche Wandstärken am Umfang des Hohlkörpers in der Regel eine erhebliche Qualitätsminderung zur Folge haben. Ersichtlich wirken sich Ungleichmäßigkeiten am Vorformling — im originären oder verstreckten Zustand — um so gravierender aus, je dünnwandiger ein Hohlkörper hergestellt werden soll.

Gemäß der Erfindung ist die Hohlblasform angepaßt indem eine zentrische Erhebung des Hohlblasformbodens mit darin ebenfalls zentrisch angeordneter muldenförmig rotationssymmetrischer, der Außenform der mittels des Reckdorns zentrisch herangeführten Vorformlingkuppe angepaßter Vertiefung vorgesehen wird. Ein Zentrieren des Vorformlings bzw. von dessen Zentrierzapfen in bezug auf den hergestellten Hohlkörper und eine hohe Wandstärkengleichheit auch im Bereich des Übergangs zwischen Hohlkörpermantel und Hohlkörperboden lassen sich durch Anwendung der beschriebenen Form des Hohlblasformbodens ohne weiteren wesentlichen Aufwand gewährleisten.

Anhand der schematischen Darstellung von Ausführungsbeispielen werden weitere Einzelheiten der Erfindung erläutert. Es zeigen :

Figur 1 einen rotationssymmetrischen Vorformling im Längsschnitt ;

Figur 2 eine Ansicht auf die Öffnungsseite des Vorformlings gemäß Fig. 1 ;

Figur 3 die Spitze eines Reckdorns teilweise im Schnitt ;

Figur 4 ein Beispiel eines Bodenteils einer Hohlblasform im Schnitt ;

Figur 5 ein fertiges Streckblaswerkzeug mit eingesetztem Vorformling gemäß Fig. 1 im Längsschnitt ; und

Figur 6 die Vorrichtung von Fig. 5 mit bereits längsgestrecktem Vorformling.

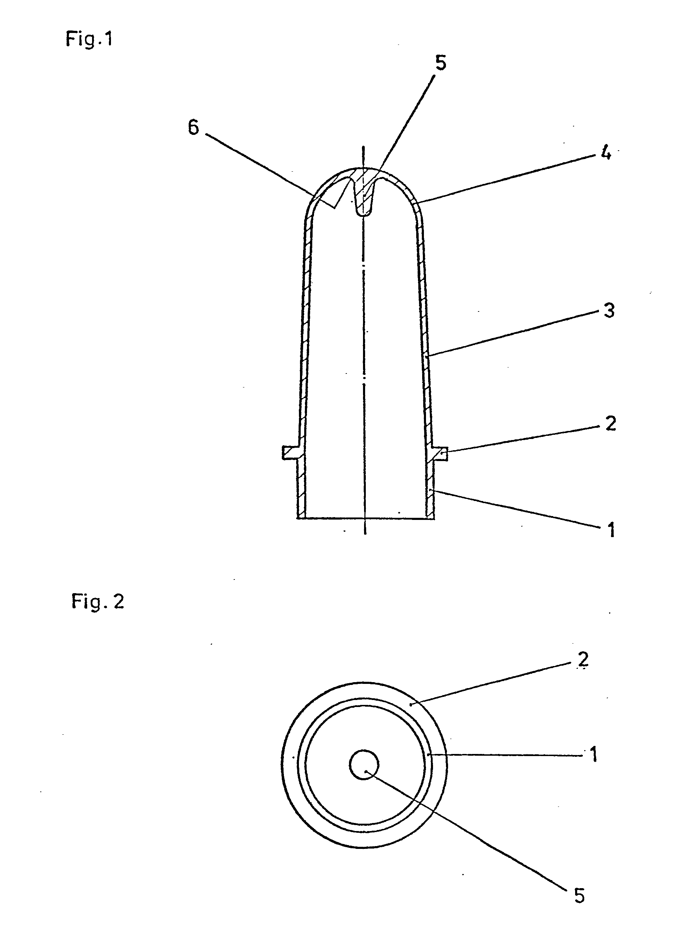

Fig. 1 zeigt einen beispielsweise rotationssymmetrischen Vorformling im Längsschnitt, der aus einem Halsteil 1 mit Bund 2, einem Schaft 3 sowie einer Kuppe 4 besteht. An der Innenseite der Kuppe 4 ragt erfindungsgemäß in Richtung der Längsachse ein Zentrierzapfen 5 mit variabel auszubildenden Längen- und Durchmessermaßen hervor. Der Übergang 6 vom Zapfen 5 in Richtung auf die Innenwand der Kuppe 4 sollte durch die um den Zapfen 5 umlaufende Kehle hindurch etwa längs einer Kreislinie verlaufen. In Fig. 2 wird der Vorformling von Fig. 1 in einer schematischen Ansicht von unten dargestellt.

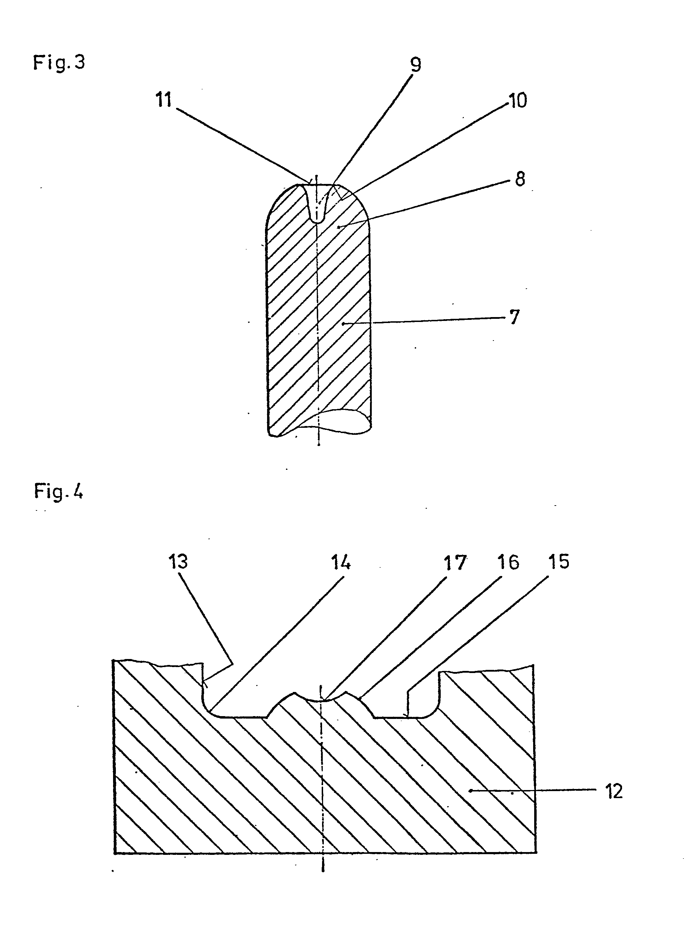

Fig. 3 zeigt die Spitze eines Reckdorns im Schnitt. Sie kann aus Metall oder einem anderen, vorzugsweise aber wärmeisolierenden, Material bestehen. Der Schaf 7 des Reckdorns geht gemäß Zeichnung in ein halbkugelförmiges oder ähnlich ausgebildetes Dornende 8 über. Dieses besitzt eine Sackbohrung 9, die in ihrer Abmessung dem Zentrierzapfen 5 von Fig. 1 angepaßt ist. Der Übergang 10 von der Sackbohrung 9 zur Stirnfläche 11 des Dornendes 8 soll trichterförmig oder derart stark abgerundet ausgebildet sein, daß sich der Zentrierzapfen 5 beim Vorfahren des Reckdorns 7 leicht und sicher in die Sackbohrung 5 einführen läßt.

In Fig. 4 ist ein Bodenteil 12 einer Hohlblasform im Schnitt dargestellt. Die Innenkontur des Bodenteils 12 besteht aus einem Zylinderstück 13 mit Übergang 14 zum planebenen Boden 15. Die Schnittlinie des Übergangs 14 soll dabei wieder auf einer Kreislinie liegen. In der Mitte des ebenen Bodens 15 befindet sich vorzugsweise eine halbkugelförmige oder ähnlich gestaltete Erhebung 16 mit in deren Mitte ausgebildeter muldenförmiger, rotationssymmetrischer Vertiefung 17. Das Zentrum der Vertiefung 17 liegt exakt auf der in Fig. 1, 3 und 4 angedeuteten strichpunktierten Mittellinie von Vorformling und dessen Zapfen 5, wenn der Reckdorn und dessen Sackbohrung 9 beim Längsrecken auf der erfindungsgemäß vorgeschriebenen Linie bewegt werden.

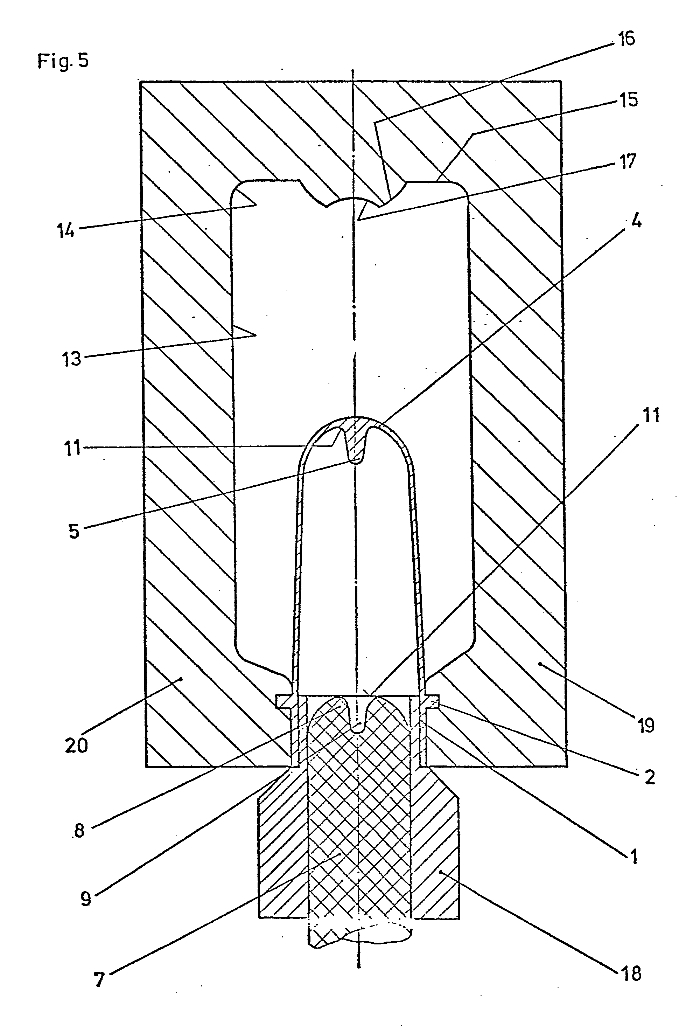

Fig. 5 zeigt einen Vorformling gemäß Fig. 1, der mit seinem Halsteil 1 auf der Aufnahme 18 der Streckblasform steckt. Die dargestellten Blasformhälften 19 und 20 umschließen den Halsteil 1 des Vorformlings von außen und fixieren den Vorformling in Längsrichtung wie auch in der Blasformmitte. Zum Ausrichten und Festhalten dient u. a. der Bund 2 des Vorformlings. Der Reckdorn gemäß Fig. 3 befindet sich noch in der Ausgangsposition. Seine Stirnfläche 11 schließt dabei bündig mit der Vorformling-Aufnahme 18 ab.

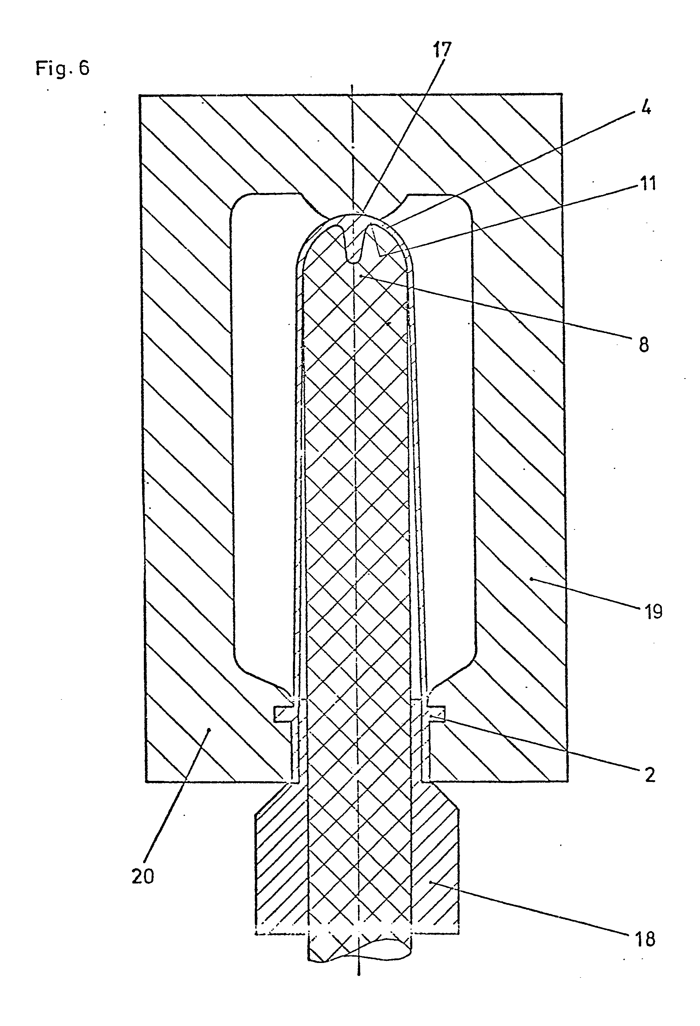

Fig. 6 zeigt wie der Reckdorn den mechanisch längsverstreckten Vorformling mit der Kuppe 4 in die Vertiefung 17 des Blasformbodens drückt. Der Reckdorn klemmt den Vorformling solange in der Vertiefung 17, bis der nachfolgende Blasvorgang zum radialen Verstrecken beendet ist, so daß ein Abweichen aus der Mitte nicht erfolgen kann.

Bezugszeichenliste

1 = Halsteil
2 = Bund
3 = Schaft
4 = Kuppe
5 = Zentrierzapfen
6 = Übergang 4/5
7 = Schaft
8 = Dornende
9 = Sackbohrung
10 = Übergang 9/11
11 = Stirnfläche
12 = Bodenteil
13 = Zylinderstück
14 = Übergang 13/15
15 = Boden
16 = Erhebung
17 = Vertiefung
18 = Aufnahme
19 = Blasformhälfte
20 = Blasformhälfte

## Ansprüche

1. Vorformling- und Formwerkzeug zum Steckblasen, bei dem ein länglicher, einseitig offener, hohler Vorformling mechanisch in Längsrichtung gereckt und gleichzeitig oder anschließend pneumatisch in radialer Richtung in eine Hohlblasform hinein aufgeblasen wird und beim mechanischen Längsrecken und pneumatischen Radialrecken besondere Vorkehrungen zum ständig exakten Führen der Mitte des als Kuppe (4) ausgebildeten geschlossenen Vorformlingendes in die genaue Mitte des Hohlblasformbodens (12) getroffen werden und die Vorformlingkuppe (4) bis zum Ende des pneumatischen Radialreckens unverrückbar im Zentrum des Hohlblasformbodens (12) festgeklemmt wird und die Vorformlingkuppe (4) beim Längsrecken ständig mit Hilfe des Reckdorns zentriert geführt und gleichzeitig der Vorformling im Anschluß an die Kuppe (4) durch Blasen radial gereckt wird, gekennzeichnet durch einen Zentrierzapfen (5) in der Mitte der Innenfläche der Vorformlingkuppe (4) und einen zentrisch sowie längsverschiebbar in der Vorformlingöffnung zu lagernden Längsreckdorn mit der Innenform der Kuppe (4) wie eine Vollform einer Hohlform genau angepaßtem Dornende (8).

2. Vorformling und Formwerkzeug nach Anspruch 1, gekennzeichnet durch einen um den Fuß des Zentrierzapfens (5) umlaufenden in die Innenfläche der Kuppe (4) längs einer Kreislinie auslaufenden übergang (6).

3. Formwerkzeug nach Anspruch 2 gekennzeichnet durch eine zentrische Erhebung (16) des Hohlblasformbodens (12) mit darin ebenfalls zentrisch angeordneter muldenförmig rotationssymmetrischer, der Außenform der mittels des Reckdorns zentrisch heranzuschiebenden Kuppe (4) angepaßter Vertiefung (17).

## Claims

1. Preform and moulding tool for stretch blow-moulding, in which an elongate, hollow preform, which is open at one side, is stretched mechanically in longitudinal direction and simultaneously or subsequently inflated pneumatically in radial direction into a hollow blow-moulding mould and special precautions are taken during the mechanical longitudinal stretching and the pneumatic radial stretching for the constantly exact guidance of the centre of the closed preform end constructed as dome (4) into the exact middle of the hollow blow-moulding mould base (12) and the preform dome (4) is clamped fast immovably in the centre of the hollow blow-moulding mould base (12) until the end of the pneumatic radial stretching and the preform dome (4) is guided constantly centred with the aid of the stretching mandril during the longitudinal stretching and the preform adjoining the dome (4) is simultaneously stretched radially by blowing, characterised by a centring spigot (5) in the middle of the inside surface of the preform dome (4) and a longitudinal stretching mandrel, which is to borne centrally as well as longitudinally slidable in the preform opening, with a mandrel end (8) exactly matched to the inside shape of the dome (4) like a solid core of a hollow mould.

2. Preform and moulding tool according to claim 1, characterised by a transition (6) encircling the foot of the centring spigot (5) and passing over along a circular line into the inside surface of the dome (4).

3. Moulding tool according to claim 2, characterised by a central protrusion (16) of the hollow blow-moulding mould base (12) with a depression (17), which is likewise centrally arranged therein, rotationally symmetrical in trough shape and matched to the external shape of the dome (4) centrally to be pushed forward by means of the stretching mandrel.

## Revendications

1. Paraison et dispositif de moulage pour un procédé d'étirage-soufflage, dans lequel on allonge mécaniquement en direction longitudinale une paraison creuse allongée ouverte d'un côté et, simultanément ou ensuite, on la gonfle en direction radiale dans un moule de soufflage creux et, lors de l'allongement longitudinal mécanique et de l'allongement radial pneumatique, on prend des précautions particulières pour guider constamment de façon exacte le milieu de l'extrémité fermée en forme de dôme (4) de la paraison vers le milieu exact du fond (12) du moule de soufflage creux et, jusqu'à la fin de l'allongement radial pneumatique, on bloque le dôme (4) de la paraison de façon immobile au centre du fond (12) du moule de soufflage creux et le dôme (4) de la paraison est constamment guidé de façon centrée lors de l'allongement longitudinal à l'aide du mandrin d'allongement et, simultanément, on allonge radialement la paraison par soufflage, à la suite du dôme (4), caractérisés par le fait que l'on prévoit, d'une part, un tenon de centrage (5) au milieu de la surface intérieure du dôme (4) de la paraison et, d'autre part, un mandrin (7) d'allongement longitudinal destiné à être monté dans l'ouverture de la paraison de façon centrée en pouvant coulisser longitudinalement et présentant une extrémité de mandrin (8) exactement adaptée à la forme intérieure du dôme (4) comme un moule plein à un moule creux.

2. Paraison et dispositif de moulage selon la revendication 1, caractérisés par une transition (6) faisant le tour du pied du tenon de centrage (5) et se terminant dans la surface intérieure du dôme (4) le long d'une ligne circulaire.

3. Dispositif de moulage selon la revendication 2, caractérisé par le fait qu'il comporte une saillie centrée (16) du fond (12) du moule de soufflage creux, dans laquelle est disposé, également de façon centrée, un creux (17) symétrique en rotation avec une forme de cuvette, adapté à la forme extérieure du dôme (4) destiné à être approché de façon centrée au moyen du mandrin d'allongement (7).

Fig.1

Fig. 2

Fig. 3

Fig. 4

Fig. 5

Fig. 6